Europäisches Patentamt

European Patent Office

Office européen des brevets

(11) Publication number: **0 030 709**
**B1**

# EUROPEAN PATENT SPECIFICATION

(45) Date of publication of patent specification: **13.11.85**

(21) Application number: **80107785.0**

(22) Date of filing: **10.12.80**

(51) Int. Cl.⁴: **B 64 D 33/02**

(54) Preventive means against the drawing of alien bodies into aircraft gas turbine engines.

(30) Priority: **12.12.79 JP 161348/79**

(43) Date of publication of application:
**24.06.81 Bulletin 81/25**

(45) Publication of the grant of the patent:
**13.11.85 Bulletin 85/46**

(84) Designated Contracting States:
**DE FR GB IT NL**

(56) References cited:
**FR-A-1 550 581**

(73) Proprietor: **FUJI JUKOGYO KABUSHIKI KAISHA**
**7-2 Nishishinjuku 1-chome Shinjuku-ku**
**Tokyo (JP)**

(72) Inventor: **Ogino, Saburo**
**634-24, Yokoyama-cho**
**Utsunomiya (JP)**
Inventor: **Taniguchi, Yoshitomo**
**2-2-21, Yamato**
**Utsunomiya (JP)**
Inventor: **Kiyoshima, Satoshi**
**2-2-21, Yamato**
**Utsunomiya (JP)**

(74) Representative: **Helms, Joachim, Dipl.-Ing.**
**Nymphenburger Strasse 81**
**D-8000 München 19 (DE)**

Courier Press, Leamington Spa, England.

## Description

This invention relates to preventive means against drawing alien bodies into aircraft gas turbine engines.

It is not rarely the case in which a gas turbine engine mounted on an airplane at its attitude ready for start or in the course of running for take-off or landing draws thereinto, accompanied by large amount of air, alien bodies such as pebbles or the like lying scattered on the ground. Such drawing of alien bodies often causes a heavy damage or at least an undesirable influence on the engine.

It has heretofore been proposed, against such drawing of alien bodies, particularly ice blocks, in the course of flight, to provide means for changing air-intake passages sidewardly or the like when required. Such a countermeasure is to an extent effective also for preventive means against drawing into the engine alien bodies lying scattered on the ground. Such a countermeasure, however, has a serious drawback that it causes lowering of air-intake efficiency and increase in the engine weight. Protecting the air-intake by means of a filter net has another and notable drawback that such a filter net soon causes blocking of meshes. There has heretofore been known still another countermeasure against drawing of such alien bodies. This countermeasure consists essentially in guiding a whirlwind which has been generated on the ground surface rearwardly by means of a jet flow spouted from a location near the air-intake and directed in an oblique, rearward and downward direction. According to such last mentioned means, however, lowering of engine efficiency which is caused by a loss of energy for the generation of such a jet flow to control the whirlwind cannot be avoided.

And, still another countermeasure which is quite effective from the view point of preventing loss of energy and lowering of engine efficiency has been disclosed by French Patent No. 1,550,581 corresponding to the precharacterizing part of claim 1. Such a countermeasure disclosed by said French Patent comprises an obstructive body which is a segment of a nacelle and is projected apart from the nacelle by means of a collapsible link means which is operated by a hydraulic cylinder. While such a countermeasure is effective, the weight of suspension means such as link means and driving means for the same is far from being negligible, particularly in cases in which the position of the nacelle over the ground surface is high. It may be without saying that such weight of parts which are useless from the view point of flight proper should be kept as small as possible.

The invention as claimed is intended to remedy these drawbacks of the foregoing countermeasures against drawing of alien bodies into engines, particularly that of the last-mentioned countermeasure. It solves not only the problem to provide means for preventing gas turbine engines in operation of aircraft on the ground from drawing thereinto alien bodies lying scattered on the ground surface without the engine efficiency in full operation being affected and giving little influence on the increase in airframe resistance in the course of a flight, but the problem to providing means for minimizing weight of such preventive means which is not only useless but is deterious for the flight proper.

To achieve the foregoing object of this invention preventive means against drawing alien bodies into aircraft gas turbine engines, having an obstructive body connected by connection means to an airframe having one or more gas turbine engines mounted thereon, said connection means having collapsible means which is capable of withdrawal into inside of said airframe, said obstructive body being located between the corresponding air-intake of a said engine and the ground surface when the airframe is on the ground, and said obstructive body being located sufficiently remote from said air-intake and near the ground surface, so that said obstructive body prevents generation of the aerodynamic stagnation point of a whirlwind on the ground surface, and said obstructive body has a bottom face which, upon withdrawal of said obstructive body into said airframe, forms a portion of the outer face of an engine nacelle are provided, in which that said obstructive body is connected pivotally to a retractable landing gear for said airframe.

In a further embodiment of the invention said obstructive body comprises step means for boarding and alighting of crews.

In another advantageous embodiment of the invention said obstructive body comprises door means for a retractable landing gear for said airframe.

Because the obstructive body is connected pivotally to a retractable landing gear, it can be kept firmly and securely at a position near the ground surface only by means of a pivoted suspension rod having very simple structure, and it can easily be driven by the retractable landing gear without any driving means to be provided independently of the driving means for the landing gear. And, as noted in the foregoing, according to this invention, as the obstructive body can easily be held firmly at a position near the ground surface, it will be seen easily that the obstructive body can be served for step means for boarding and alighting of crews. So, according to this invention, weight required for holding securely said obstructive body in its most effective position and for driving said obstructive body is minimum, so that total weight of an airframe provided with means for preventing effectively drawing of alien bodies into the engine can be minimized.

Ways for carrying out the invention are described in detail below with reference to the drawings, in which:

Fig. 1 is a schematic illustrative view in the vicinity of an engine nacelle for explaining an aerodynamic phenomenon causing drawing of alien bodies,

Fig. 2 is a schematic ilustrative view similar to Fig. 1 for explaining a critical state prior to generation of a whirlwind,

Fig. 3 is a schematic illustrated view similar to Fig. 1 and 2 for explaining the phenomenon upon an obstructive body being provided,

Fig. 4 is a side view of an embodiment according to this invention.

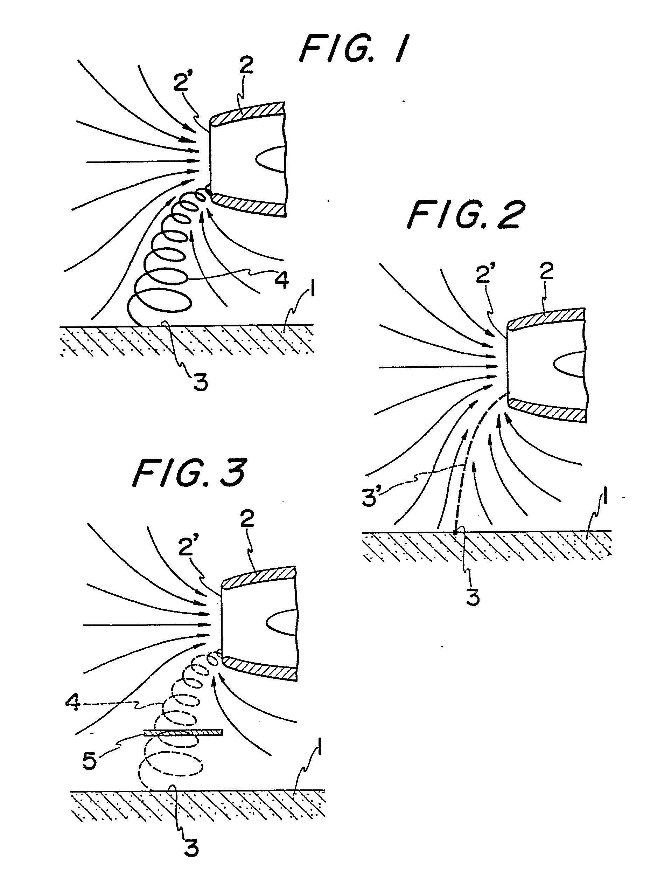

Referring to Fig. 1, numeral 4 indicates a whirlwind caused by an engine in operation of an airplane on the ground. Such whirlwind causes whirling-up of alien bodies such as pebbles or the like casually lying scattered on the ground so that the same may be drawing through air-intake 2' into gas turbine engine 2. Such a phenomenon is well known.

Referring to Fig. 2, upon operation of an engine, a large amount of air is drawn with force through air-intake 2' which is provided at the front face of engine nacelle, i.e. gas turbine engine 2. The stream lines are formed such as indicated in the figure which show also that air in the vicinity of ground surface 1 is drawn upwardly. However, the velocity of such air flow is small, presence of stagnation point 3 which is unstable from the view point of energy at a location where stagnation line 3' crosses ground surface 1 can be found. However, with all the presence of such a stagnation point, ascension of alien bodies such as pebbles or the like accompanied by air flow to reach air-intake 2' cannot yet be caused. Such a state of air below the air-intake is considered to be a critical state. And, upon addition of a natural wind having a component of turbulence to an environment as stated above, such a natural wind forms itself to be a trigger, and said critical state gives way to cause a whirlwind 4 as shown in Fig. 1.

Such a natural wind having a component of turbulence, other than a phenomenon which is commonly present in nature, may be caused upon agitation of natural wind with no component of turbulence. And, such an agitation is caused by the presence of any exhaust gas discharged from other airplanes, or any movement of motorcars or individuals passing nearby. And, it can also be caused in such an occasion in which an airplane passes a corner of a building such as a hangar.

As stated in the foregoing, a whirlwind is caused in such an occasion in which both conditions, that is, (1) a large amount of air is being drawn with force into the air-intake of an aircraft engine, (2) a natural wind having a component of turbulence is present, are satisfied. In an early stage of such whirlwind 4, it is only a small aireddy, and it extends upwardly and is strengthened afterwards. Such a small air-eddy has not but a small energy. According to wind tunnel experiments, stagnation line 3' is cut loose at a middle portion thereof by means of an obstructuve body such as a metal plate. Upon the stagnation line being cut in such a way, the condition required for the generation of a stagnation point is lost to cause interception of generation of whirlwind 4. The body indicated at 5 in Fig. 3 is such an obstructive body such as stated above. Obstructive body 5 may have a plate-like configuration such as shown in the figure, but it is not limited to be a plate-like body. And, it is desired that such an obstructive body be located sufficiently below air-intake 2' and extend horizontally from a position slightly rearward of a point which is just below the air-intake to a position which is forward of the same point.

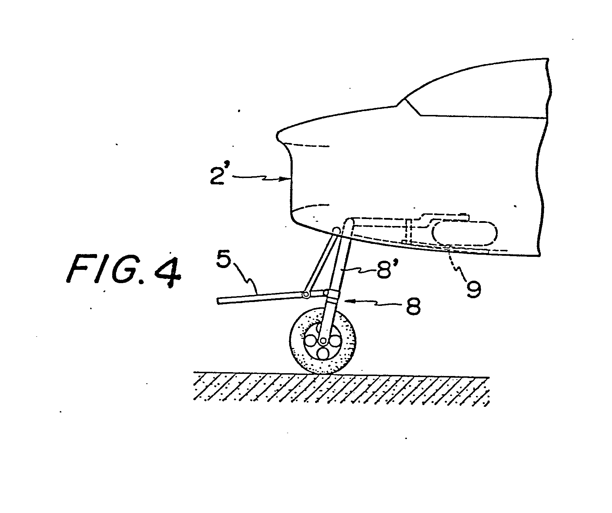

In Fig. 4 is shown an embodiment of this invention. In this embodiment for single engine airplanes, obstructive body 5 is connected pivotally to retractable landing gear 8' of alighting gear 8. Upon withdrawal of alighting gear 8 into inside of the airframe such as indicated at the imaginary lines, obstructive body 5 composes door 9 for the alighting gear so that the doorway can be closed by obstructive body 5.

## Claims

1. Preventive means against drawing alien bodies into airdraft gas turbine engines, having an obstructive body (5) connected by connection means to an airframe having one or more gas turbine engines (2) mounted thereon, said connection means having collapsible means which is capable of withdrawal into inside of said airframe, said obstructive body being located between the corresponding air-intake (2') of a said engine (2) and the ground surface (1) when the airframe is on the ground, and said obstructive body (5) being located sufficiently remote from said air-intake (2') and near the ground surface (1), so that said obstructive body (5) prevents generation of the aerodynamic stagnation point (3) of a whirlwind (4) on the ground surface (1), and said obstructive body (5) has a bottom face which, upon withdrawal of said obstructive body (5) into said airframe, forms a portion of the outer face of an engine nacelle (2), characterized in that said obstructive body (5) is connected pivotally to a retractable landing gear (8') for said airframe.

2. Preventive means against drawing alien bodies into aircraft gas turbine engines as claimed in claim 1, characterized in that said obstructive body (5) comprises step means for boarding and alighting of crews.

3. Preventive means against drawing alien bodies into aircraft gas turbine engines as claimed in claim 1, characterized in that said obstructive body (5) comprises door means for a retractable landing gear (8') for said airframe.

## Revendications

1. Moyens préventifs contre l'aspiration de corps étrangers dans les réacteurs d'avions comportant un corps d'obstruction connecté par des moyens de connection à la carlingue de l'avion comprenant un ou plusieurs réacteurs, les dits moyens de connection comportant des moyens reliables susceptibles de se retirer à l'intérieur de la carlingue, le corps d'obstruction étant situé entre la prise d'air respective d'un des dits moteurs (2) et la surface du sol (1) lorsque la carlingue se trouve au sol, suffisamment loin de la dite prise d'air (2') et près de la surface du sol (1) de manière à ce que le dit corps d'obstruction puisse empêcher la formation du point de stagnation aérodynamique d'un tourbillon à la surface du sol (1), le dit corps d'obstruction (5) ayant une face intérieure qui, lors du retrait du dit corps d'obstruction (5) dans la carlingue, forme une portion de la surface extérieure de la nacelle d'un moteur (2), caractérisés en ce que le corps d'obstruction (5) est connecté de manière pivotable à un train d'atterrissage rétractable (8') de la dite carlingue.

2. Moyens préventifs contre l'aspiration de corps étrangers dans les réacteurs d'avions tels que revendiqués dans la revendication 1, caractérisés en ce que le dit corps d'obstruction (5) comporte des marches permettant l'embarquement et le débarquement d'equipages.

3. Moyens préventifs contre l'aspiration de corps étrangers dans les réacteurs d'avions tels que revendiqués dans la revendication 1, caractérisés en ce que le corps d'obstruction (5) comporte des moyens formant porte pour un train d'atterrissage rétractable de la dite carlingue.

**Patentansprüche**

1. Vorbeugende Mittel gegen das Ansaugen von Fremdkörpern in Flugzeuggasturbinen mit einem mittels Verbindungsmitteln mit einem Flugwerk, das eine oder mehrere daran angebrachte Turbinen aufweist, verbundenen Sperrkörper, wobei die Verbindungsmittel eine zusammenklappbare Einrichtung umfassen, die in das Flugwerkinnere einziehbar ist, und der Sperrkörper zwischen dem entsprechenden Lufteinlaß (2') der Turbine (2) und dem Erdboden (1) angeordnet ist, wenn sich das Flugwerk am boden befindet, und der Sperrkörper (5) ausreichend vom Lufteinlaß (2') entfernt und in der Nähe des Erdbodens (1) angeordnet ist, so daß der Sperrkörper (5) die Erzeugung eines aerodynamischen Staupunktes (3) eines Wirbelwindes (4) am Erdboden (1) verhindert, und der Sperrkörper (5) eine Bodenfläche umfaßt, die nach dem Einziehen des Sperrkörpers (5) in das Flugwerk einen Teil der Außenfläche einer Turbinenzelle (2) bildet, dadurch gekennzeichnet, daß der Sperrkörper (5) schwenkbar mit einem Fahrwerk (8') des Flugwerks verbunden ist.

2. Vorbeugende Mittel gegen das Ansaugen von Fremdkörpern in Flugzeuggasturbinen nach Anspruch 1, dadurch gekennzeichnet, daß der Sperrkörper (5) ein Trittbrett zum Besteigen und zum Aussteigen für das Flugpersonal umfaßt.

3. Vorbeugende Mittel gegen das Ansaugen von Fremdkörpern in Flugzeuggasturbinen nach Anspruch 1, dadurch gekennzeichnet, daß der Sperrkörper (5) eine Klappe bildende Mittel für ein Einziehfahrwerk (8') für das Flugwerk umfaßt.

FIG. 1

FIG. 2

FIG. 3

FIG. 4